# EUROPÄISCHE PATENTANMELDUNG

(11) **EP 2 639 938 A1**
(43) Veröffentlichungstag der Anmeldung: **18.09.2013**
(21) Anmeldenummer: 12159927.8
(22) Anmeldetag: 16.03.2012
(51) Int. Cl.: H02K 3/28, H02K 1/27

(54) **Elektrischer Antriebsmotor eines Kraftwagens mit geringem Entmagnetisierungsfeld gegen einen permanent erregten Rotor sowie Kraftwagen mit einem solchen Antriebsmotor**

(71) Anmelder: Siemens Aktiengesellschaft, 80333 München (DE)
(72) Erfinder: Vollmer, Rolf, 36129 Gersfeld (DE)

(57) **Zusammenfassung**

Die Erfindung betrifft einen elektrischen Antriebsmotor mit einem Stator (42) und einem Rotor, zwischen denen ein Luftspalt (46) ausgebildet ist, wobei der Stator (42) Nuten (N1 bis N18) aufweist, in denen elektrische Spulen (L1 bis L18) angeordnet sind, welche dazu ausgelegt sind, bei Einprägen eines dreiphasigen Drehstroms in die Spulen (L1 bis L18) ein magnetisches Drehfeld in dem Luftspalt (46) zu erzeugen. Der Rotor (10) weist entlang eines Rotorumfangs (26) angeordnete Permanentmagneten (14) sowie zwischen diesen angeordnete weichmagnetische Flussleitelemente (16) auf. Magnetisierungen (24) der Permanentmagneten (14) sind tangential zum Rotorumfang (26) ausgerichtet. Ein magnetischer Fluss der Permanentmagneten (14) wird durch die Flussleitelemente (16) in radialer Richtung (28) umgelenkt. Im Luftspalt (46) entlang des Rotorumfangs (26) ergeben sich magnetische Pole (34) des Rotors (10). Die Anzahl der Nuten (N1 bis N18) des Stators (42) ist anderthalb mal so groß wie die Anzahl der Pole (34) des Rotors (10).

## Beschreibung

Die Erfindung betrifft einen elektrischen Antriebsmotor eines elektrisch antreibbaren Kraftwagens. Im Zusammenhang mit der Erfindung ist unter einem elektrischen Antriebmotor insbesondere ein Synchronmotor oder Servomotor zu verstehen. Die Erfindung umfasst auch einen Kraftwagen mit einem elektrischen Antriebsmotor. Der erfindungsgemäße Antriebsmotor weist einen Stator und einen Rotor auf, wobei der Rotor als magnetisch aktiven Teil Permanentmagneten sowie zwischen diesen angeordnete weichmagnetische Flussleitelemente umfasst.

Als magnetisch aktiver Teil des Läufers wird hier und im Folgenden derjenige Bestandteil des Läufers verstanden, der in einem signifikanten Ausmaß an der eigentlichen magnetischen Wechselwirkung zwischen Stator und Läufer über den Luftspalt des elektrischen Antriebsmotors beteiligt ist. Davon abzugrenzen ist derjenige Teil des Läufers, welcher den magnetisch aktiven Teil lediglich trägt und einer mechanischen Kraftübertragung dient, also im Falle eines Rotors beispielsweise dessen Welle.

Um bei vorgegebenem Bauraum mittels einer elektrischen Maschine im Motorbetrieb ein möglichst großes Drehmoment erzeugen zu können, besteht eine Lösung in der Bereitstellung einer möglichst großen magnetischen Flussdichte im Bereich des Luftspalts zwischen Stator und Läufer der elektrischen Maschine. Beispielsweise ist es bei Elektrofahrzeugen nötig, bei einem Antriebsmotor eine Flussdichte mit einem Betrag von durchschnittlich 0,6 Tesla bis 0,8 Tesla im Luftspalt bereitzustellen. Im Falle eines Generators ergibt sich dieselbe Lösung in Bezug auf das Erzeugen einer elektrischen Spannung. Bei permanenterregten Läufern, d. h. Läufern ohne elektrische Erregung über Spulen, bei denen das Läufermagnetfeld ausschließlich über Permanentmagneten erzeugt wird, kann eine möglichst große Flussdichte über eine entsprechend große Anzahl von Permanentmagneten erzeugt werden. Hierzu kann es notwendig sein, im Läufer eine große Polzahl vorzusehen. Dies wiederum führt zu dem Problem, das bei schnell wechselnden Statorfeldern, also z.B. bei hohen Drehzahlen, eine hohe Ummagnetisierungsfrequenz im Läufer und im Stator resultiert. Bei dem Beispiels eines Antriebsmotors für ein Elektrofahrzeug muss der Rotor im Bereich zwischen 5000 und 10000 Umdrehungen pro Minute rotieren können. Dies kann große Wirbelströme und somit eine hohen Erwärmung der elektrischen Maschine verursachen.

Ein weiteres Problem kann sich bei der Verwendung von kostengünstigen Materialien für die Permanentmagneten ergeben, also z. B. bei der Verwendung von Ferrit. Die von elektrischen Spulen des Stators erzeugten Magnetfelder durchdringen den Rotor, um auf diesen eine Antriebskraft auszuüben. Hierbei kann es durch Gegenfelder des Ständers zu einer Entmagnetisierung der Permanentmagneten kommen.

Eine Aufgabe der vorliegenden Erfindung besteht darin, eine elektrische Maschine kostengünstig herstellen zu können, mit der ein großes Drehmoment auch bei großen Drehzahlen übertragbar ist und die in einem Elektrofahrzeug als Antriebsmotor genutzt werden kann.

Die Aufgabe wird durch einen elektrischen Antriebsmotor gemäß Patentanspruch 1 gelöst. In Bezug auf das Elektrofahrzeug ist eine Lösung durch einen Kraftwagen gemäß Patentanspruch 15 gegeben. Vorteilhafte Weiterbildungen des elektrischen Antriebsmotors sind durch die Unteransprüche gegeben.

Der erfindungsgemäße Antriebsmotor lässt sich kompakt bauen und ist zugleich entmagnetisierungssicher. Er ist dabei zunächst in der typischen Weise ausgestaltet, d.h. er umfasst einen Stator und einen Rotor, zwischen denen ein Luftspalt ausgebildet ist, wobei der Stator Nuten aufweist, in denen elektrische Spulen angeordnet sind, um in die Spulen ein magnetisches Drehfeld in den Luftspalt zu erzeugen, wenn ein dreiphasiger Drehstrom in die Spulen eingeprägt wird. Der Rotor weist für eine Permanenterregung Permanentmagneten auf, die entlang eines Rotorumfangs angeordnet sind. Mit Umfangsrichtung ist hier und im Folgenden die übliche Bezeichnung gemeint, d.h. bezogen auf eine Rotationsachse des Rotors ergibt sich die Umfangsrichtung als Verlaufsrichtung des Rotorumfangs in einer Ebene senkrecht zur Rotationsachse des Rotors. Zwischen den Permanentmagneten sind jeweils weichmagnetische Flussleitelemente angeordnet. Sie können beispielsweise aus einem Blechpaket gebildet sein, wie es auch im Zusammenhang mit dem magnetisch aktiven Teil eines Stators aus dem Stand der Technik bekannt ist. Unter einem Blechpaket ist hierbei eine Aufeinanderschichtung von weichmagnetischen Blechen gemeint, zwischen denen jeweils eine elektrisch isolierende Schicht zum Vermeiden von Wirbelströmen vorgesehen ist.

Die erfindungsgemäße als Antriebsmotor ausgebildete elektrische Maschine erlaubt es nun, als Permanentmagneten nicht nur die verhältnismäßig kostspieligen, aber dafür starken Seltenerdmagneten zu verwenden, sondern es können auch kostengünstigere Ferritmagneten verwendet werden. Deren Magnetfeld ist bei gleicher Baugröße im Vergleich zu Seltenerdmagneten allerdings schwächer. Dies wird bei dem erfindungsgemäßen elektrischen Antriebsmotor dadurch ausgeglichen, dass die Magnetisierungen der Permanentmagneten tangential zum Rotorumfang ausgerichtet sind, also nicht in der üblichen Weise zum Luftspalt hin. Da sich zwischen den Permanentmagneten jeweils ein Flussleitelement befindet, wird das von dem Permanentmagneten in tangentialer Richtung austretende magnetische Feld durch diese Flussleitelemente in radialer Richtung umgelenkt. Der magnetische Fluss tritt dann in radialer Richtung aus den Flussleitelementen in den Luftspalt ein (vom Nordpol des Permanentmagneten kommend) bzw. in radialer Richtung aus dem Luftspalt aus und in ein anderes Flussleitelement ein (zum Südpol des Permanentmagneten hin). Insgesamt ergibt sich so entlang des Rotorumfangs eine Abfolge von magnetischen Polen des Rotors im Luftspalt des Antriebsmotors. Die Ausrichtung tangential zu Rotorumfang muss dabei nicht perfekt sein. die Magnetisierungen der Permanentmagneten können auch in einem Bereich zwischen -45° und 45°, bevorzugt aber zwischen -15° und 15°, bezogen auf die tangentiale Richtung ausgerichtet sein.

Ein Schutz der Permanentmagneten gegen eine Entmagnetisierung aufgrund der magnetischen Felder der elektrischen Spulen des Stators ergibt sich, wenn der Stator und der Rotor in einer ganz speziellen Weise aufeinander abgestimmt sind, indem nämlich die Anzahl der Nuten des Stators anderthalbmal so groß wie die Anzahl der Pole des Rotors ist. Durch diese Konstruktionsbedingung lassen sich die elektrischen Spulen des Stators derart in den Nuten des Stators anordnen, dass das Magnetfeld der elektrischen Spulen nur eine minimale Eindringtiefe in den Rotor aufweist, sodass entsprechend auch nur ein geringer Anteil des magnetischen Felds der Spulen eine Entmagnetisierung der Permanentmagneten bewirken kann.

Die Spulen des Stators sind jeweils aus einer Wicklung gebildet, die man sich hier in zwei Wicklungshälften aufgeteilt denken kann. Jede der Wicklungshälften erstreckt sich dabei entlang der Rotationsachse des Rotors. Die beiden Wicklungshälften sind an jeweiligen Stirnseiten des Rotors über den Wickelkopf oder Wicklungskopf miteinander verbunden. Um nun die Eindringtiefe des magnetischen Felds der Spulen im Rotor zu minimieren, kann gemäß einer Ausführungsform des erfindungsgemäßen Antriebsmotors vorgesehen sein, dass bei jeder Spule deren Wicklungshälften in benachbarten Nuten angeordnet sind. Mit anderen Worten umgibt jede Spule nur einen der jeweils zwischen zwei Nuten ausgebildeten sogenannten Polzähne des Stators. Durch diese maximale sogenannte Wicklungssehnung von nur einer Nutteilung kann die angestrebte geringe Eindringtiefe auf eine Weise bei dem genannten Nutenzahl-zu-Polzahl-Verhältnis erreicht werden. Durch die verhältnismäßig kleine, von jeder Spule umschlossene Fläche (entsprechend der Grundfläche eines einzelnen Polzahns) ergibt sich für jede Spule eine verhältnismäßig geringe Induktivität. Damit hat ein entsprechend gewickelter Motor bei der maximal zur Verfügung stehenden Spannung die höchste Leistung. Zugleich ist bei dem gewählten Verhältnis der Nutenzahl zur Pohlzahl als weiterer Vorteil auch bei dieser Wicklungsanordnung möglich, mittels der Wicklungen mit dem Stator ein magnetischen Drehfeldes mit einer Polzahl zu erzeugen, die gleich der Polzahl des Rotors ist, sodass der elektrische Antriebsmotor gleichmäßig rund läuft.

Besonders kompakt lässt sich die erfindungsgemäße elektrische Maschine bauen, wenn in jeder der Nuten jeweils immer Wicklungshälften zweier unterschiedlicher Spulen angeordnet sind. Zudem ergibt sich durch diesen gleichmäßigen Aufbau (zwei Wicklungshälften pro Nut) nicht die Notwendigkeit, eine der Spulen mit doppelter Windungszahl auszugestalten, um einen gleichmäßigen magnetischen Fluss im Luftspalt zu erzeugen. Diese erhöhte Windungszahl würde zu einer Vergrößerung der Durchflutung führen, was wiederum zu Sättigungseffekten und auch zu einem Beitrag zur Entmagnetisierung führen würde.

Werden gemäß der eben beschriebenen Ausführungsform zwei Wicklungshälften pro Nut vorgesehen, so können diese in radialer Richtung zu einer Zweischichtwicklung angeordnet sein. Besonders kleine Wicklungsköpfe und ein hoher Füllfaktor der Nuten mit Drähten der Wicklungen ergibt sich allerdings, wenn in einer Nut die Wicklungshälften entlang des Umfangs nebeneinander angeordnet sind, sodass jede Wicklung den von ihr umgebenen Polzahn eng umschließt.

Im Bezug auf den Einsatz der elektrischen Maschine in einem Elektrofahrzeug hat es sich als besonders günstig erwiesen, die Anzahl der Pole gleich oder größer als 12 zu wählen. Mit 12 und mehr Polen ergeben magnetische Felder von mehr als 0,6 Tesla im Luftspalt. Durch das beschriebene Wicklungssystem entstehen geringe entmagnetisierende Magnetfelder. Dadurch kann bei geringem Magnetmaterialeinsatz eine hohe Drehmomentdichte erreicht werden, was dem Elektrofahrzeug ein hohes Beschleunigungsvermögen bei geringer Motormasse verleiht. Bevorzugt ist die Anzahl der Pole gleich 12 oder 14 oder 16. Dann ergibt sich auch bei einer Drehzahl des Rotors von 10000 Umdrehungen pro Minute dennoch eine Ummagnetisierungsfrequenz von weniger als 1500 Hz, sodass die Wärme, die in den Blechen des Ständers aufgrund von Wirbelströmen entsteht, verhältnismäßig gering bleibt und deshalb gut abgeführt werden kann. Damit hat der erfindungsgemäße Antriebsmotor eine hohe Leistungsdichte.

Das erwähnte Verhältnis der Anzahl der Pole zur Anzahl der Nuten erlaubt es zudem, die Spulen der elektrischen Maschine in einer besonders günstigen Weise zu schalten. Die elektrische Maschine weist drei elektrische Kontakte auf, die dazu ausgelegt sind, jeweils einer vorbestimmten Anzahl der Spulen einen elektrischen Strom aus einer der Phasen des dreiphasigen Drehstromnetzes zuzuführen. Mit jedem der Kontakte sind hier gleich viele Spulen verbunden. Durch die gewählte Zahl der Nuten im Verhältnis zu der Polzahl können dabei alle mit jeweils einem Kontakt verbundenen Spulen zueinander parallel geschaltet sein. Dadurch ist im Vergleich zu den sonst üblichen Wicklungen die Verwendung des dünnsten Wickeldrahtes möglich, wodurch sich wiederum die Wickeltechnik beim Herstellen der elektrischen Maschine deutlich vereinfacht.

Die Herstellungskosten der elektrischen Maschine lassen sich durch Verwendung von Ferritmagneten als Permanentmagneten noch weiter reduzieren. Aus den obigen Darstellungen geht dabei hervor, dass eine Gefahr der Entmagnetisierung dieser Ferritmagneten bei dem erfindungsgemäßen elektrischen Antriebsmotor auch bei dünnen Permanentmagneten verhindert wird.

Das im Vergleich zu Seltenerdmagneten verhältnismäßig schwache magnetische Feld der Ferritmagneten lässt sich bei der erfindungsgemäßen elektrischen Maschine auch besonders einfach noch weiter konzentrieren, d. h. der magnetische Fluss der Ferritmagneten lässt sich noch stärker verdichten, indem die Flussleitelemente entsprechend ausgestaltet werden. Hierzu muss bei einem Flussleitelement ein Verhältnis derjenigen Oberfläche, durch welche der magnetische Fluss eines der Permanentmagneten zum Luftspalt hin austritt oder aus diesem in das Flussleitelement hineintritt, zu einer Polfläche des Permanentmagneten größer als Eins sein. Die Polfläche des Permanentmagneten ist dabei entweder die Fläche des Nordpols oder des Südpols des Permanentmagneten.

Selbst mit Ferritmagneten ist bei dieser Wahl der Oberflächenverhältnisse eine durchschnittliche Feldstärke in einem Bereich von 0,6 Tesla bis 1,0 Tesla im Luftspalt der elektrischen Maschine möglich. Bevorzugt wird hier eine durchschnittliche Feldstärke im Bereich von 0,6 Tesla bis 0,8 Tesla erzeugt, was die elektrische Maschine besonders geeignet für die Verwendung in Elektrofahrzeugen macht.

Auch im Bezug auf die Drehzahl kann hier, wie bereits beschrieben, der für Elektrofahrzeug nötige Betriebsbereich von bis zu 10000 Umdrehungen pro Minute erreicht werden. Um hierbei zu gewährleisten, dass der Rotor gegen die entstehenden Fliehkräfte stabilisiert ist, sieht eine vorteilhafte Weiterbildung der elektrischen Maschine vor, dass der Rotor Bandagen aufweist, welche dazu ausgelegt sind, die Permanentmagneten und die Flussleitelemente mit einer Kraft zur Welle des Rotors hin zu beaufschlagen. Eine hierbei gegebenenfalls nötige Dehnungssteife der Bandagen kann durch Verwendung von Glasfasern in den Bandagen erreicht werden. Durch die Bandagen, die bevorzugt mit einem Kunstharz ausgehärtet sind, ist der magnetisch aktive Teil des Rotors wie von einem Gehäuse umgeben, das für die mechanische Stabilität des Rotors sorgt. Anstelle der Bandagen können auch andere Anpressmittel vorgesehen sein, wie z. B. eine Schelle oder ein oder mehrere Bänder aus z.B. Stahl oder Endscheiben oder Klammern an den Stirnseiten des Rotors.

Wie bereits erwähnt umfasst die Erfindung auch einen Kraftwagen, welcher eine elektrische Antriebseinrichtung aufweist, die dabei eine Ausführungsform der erfindungsgemäßen elektrischen Maschine aufweist.

Im Folgenden wird die Erfindung noch einmal konkreter anhand von Ausführungsbeispielen erläutert. Dazu zeigt:
- FIG 1: eine schematische Darstellung eines Querschnitts eines Rotors einer elektrischen Maschine, die eine Ausführungsform des erfindungsgemäßen elektrischen Antriebsmotors darstellt,
- FIG 2: eine schematische Darstellung eines Querschnitts eines Stators einer elektrischen Maschine, die eine Ausführungsform des erfindungsgemäßen elektrischen Antriebsmotors darstellt,
- FIG 3: ein Diagramm mit zeitlichen Verläufen von Stromstärken in drei Phasenleitern eines dreiphasigen Drehstromnetzes, mittels welchem in dem Stator von FIG 2 ein magnetisches Drehfeld erzeugt wird,
- FIG 4: einen Schaltplan zu dem Stator von FIG 2,
- FIG 5: ein Diagramm betreffend eine magnetische Flussdichte in Luftspalten von elektrischen Maschinen, und
- FIG 6: ein Diagramm betreffend die Frequenz von Wirbelstromfeldern.

Die Beispiele stellen bevorzugte Ausführungsformen der Erfindung dar.

Bei dem im Folgenden erläuterten Beispiel stellen die beschriebenen Komponenten der elektrischen Maschinen jeweils einzelne, unabhängig voneinander zu betrachtende Merkmale der elektrischen Maschinen dar, welche die elektrischen Maschinen jeweils auch unabhängig voneinander weiterbilden und damit auch einzeln oder in einer anderen als der gezeigten Kombination als Bestandteil der Erfindung anzusehen sind.

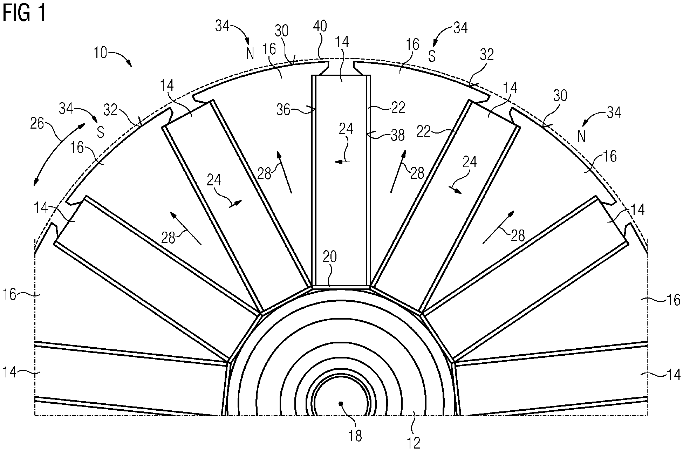

FIG 1 zeigt einen Querschnitt eines Rotors 10, bei welchem an einer Welle 12 Permanentmagneten 14 befestigt sind, zwischen denen jeweils Flussleitelemente 16 eingefügt sind. Von dem Rotor 10 ist in FIG 1 nur ein Ausschnitt gezeigt, wie durch Bruchlinien angedeutet ist. Der Rotor 10 kann in einer elektrischen Maschine eingebaut sein, beispielsweise einer Synchronmaschine oder einem Servomotor. Die elektrische Maschine kann beispielsweise ein Antrieb für einen Personenkraftwagen, ein anderes Elektro- oder Hybridfahrzeug sein.

Eine Rotationsachse 18 des Rotors 10 verläuft senkrecht zur Bildebene von FIG 1. Der Rotor 10 weist insgesamt eine zylinderförmige Grundform auf, wobei die Zylinderachse mit der Rotorachse 18 zusammenfällt. Die Welle 12 kann in dem gezeigten Beispiel aus einem massiven Körper aus Stahl gebildet sein. Die Permanentmagneten 14 können eine längliche, quaderförmige Grundform aufweisen, wobei die Längserstreckung parallel zur Rotationsachse 18 verläuft. Genauso handelt es sich bei den Flussleitelementen 16 um längliche Körper, die jeweils als Grundform diejenige eines Sektors eines Zylinders aufweisen, wobei Körper mit ihrer Längserstreckung ebenfalls parallel zur Rotationsachse 18 ausgerichtet sind. Insgesamt sind die Permanentmagneten 14 in dem in FIG 1 gezeigten, senkrecht zur Rotationsachse 18 gebildeten Querschnitt sternförmig an der Welle 12 angeordnet. Die Flussleitelemente 16 weisen in dem Querschnitt eine Keilform auf und sind zwischen den Permanentmagneten 14 angeordnet.

Bei den Permanentmagneten 14 kann es sich um keramische Magneten, beispielsweise um Ferritmagneten handeln. Die Permanentmagneten 14 sind jeweils beispielsweise durch eine Löt- oder Klebeverbindung 20 an der Welle 12 befestigt. In FIG 1 ist der Übersichtlichkeit halber lediglich für einen der Permanentmagneten 14 die Lage der Verbindung 20 gezeigt. Bei den Permanentmagneten 14 weist eine jeweilige Magnetisierung 24 entlang eines Umfangs 26 (die Umfangsrichtung hier durch einen Doppelpfeil angezeigt, da die Orientierung hier keine Rolle spielt). Das von den Permanentmagneten 14 erzeugte magnetische Feld wird durch die Flussleitelemente 16 in eine radiale Richtung 28 nach außen hin umgeleitet und hierbei konzentriert.

Die Flussleitelemente 16 sind hierzu aus einem weichmagnetischen Material gefertigt. Sie können beispielsweise jeweils durch ein Blechpaket gebildet sein. Die Flussleitelemente 16 müssen nicht unmittelbar an der Welle 12 befestigt. Jedes Flussleitelement 16 kann durch eine Klebeverbindung 22 an denjenigen Permanentmagneten 14 fixiert sein, zwischen denen es sich befindet. Auch von den Verbindungen 22 ist in FIG 1 der Übersichtlichkeit halber lediglich eine Verbindungen 22 für ein Flussleitelement 16 mit einem Bezugszeichen versehen.

Durch die Flussleitelemente 16 wird in dem Rotor 10 der aus den Permanentmagneten 14 an deren Nordpolen austretende magnetische Fluss in einer radialen Richtung 28 radial nach außen zu einer am Rotor 10 außen liegenden Oberfläche 30 der entsprechenden Flussleitelemente 16 geführt. Über weitere Flussleitelemente 16 tritt dann der magnetische Fluss durch Oberflächen 32 weiterer Flussleitelemente 16 jeweils wieder in den Rotor 10 ein und wird an der Südpol-Seite der Permanentmagneten 14 wieder zu diesem zurückgeführt. Insgesamt entstehen so magnetische Pole 34 an der Außenseite des Rotors 10 entlang von dessen Umfang 26. Die Anzahl der Pole 34 beträgt bevorzugt 12, 14 oder 16. Der in FIG 1 gezeigte Rotor 10 weist 14 Pole 34 auf.

Die Polflächen 36, 38 der Permanentmagneten 14 (hier wieder nur für einen Permanentmagneten kenntlich gemacht) weisen dabei eine größere Fläche auf als die Flussaustrittsflächen 30 bzw. die Flusseintrittsflächen 32 der angrenzenden Flussleitelemente 16. Hierdurch ergibt sich eine Flusskonzentration, d. h. die magnetische Flussdicht im Luftspalt an der Außenseite des Rotors 10 weist einen größeren Betrag auf als die magnetische Flussdichte an den Polflächen 36, 38 eines jeden Permanentmagneten 14.

Die Permanentmagneten 14 und die Flussleitelemente 16 sind von Bandagen 40 umgeben. In FIG 1 sind die Bandagen 40 lediglich schematisch dargestellt. Durch die Bandagen 40 wird auf die Flussleitelemente 16 und über diese hier indirekt auf die Permanentmagneten 14 ein Druck zum Inneren des Rotors 10 in Richtung zur Welle 12 ausgeübt.

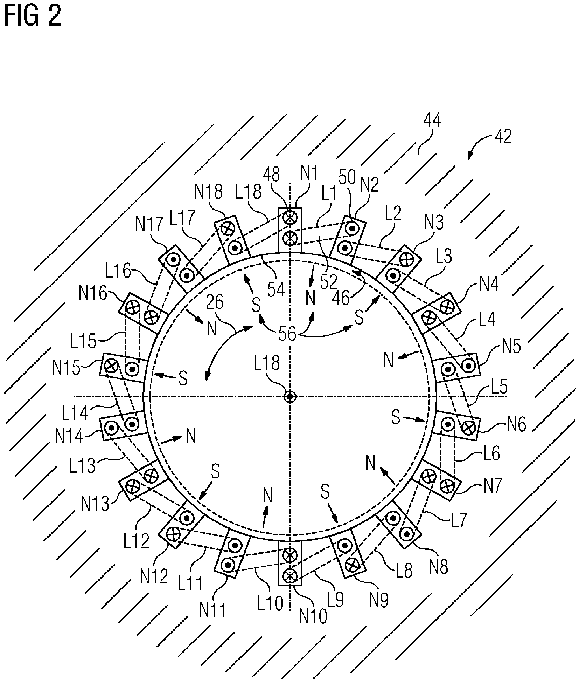

In FIG 2 ist ein Stator 42 einer elektrischen Maschine gezeigt. Auch bei der elektrischen Maschine 42 kann es sich um einen Bestandteil eines Synchronmotors oder eines Servomotors handeln. Der Stator 42 kann beispielsweise in einem Elektrofahrzeug eingebaut sein. Von einem in dem Stator 42 befindlichen Rotor ist in FIG 2 nur ein Umfang gestrichelt dargestellt. Der Rotor kann in dem Stator 42 um eine Rotationsachse 18 rotieren, die sich senkrecht zur Bildebene von FIG 2 erstreckt. Der Stator 42 weist einen weichmagnetischen Grundkörper 44 auf, der beispielsweise aus einem Blechpaket gebildet sein kann. In den weichmagnetischen Grundkörper 44 sind Nuten N1 bis N18 ausgebildet, im vorliegenden Beispiel handelt es sich um 18 Nuten. Der in dem Stator 42 befindliche Rotor weist in diesem Fall insgesamt zwölf magnetische Pole auf, die durch Permanentmagneten des Rotors erzeugt sind und die entlang eines Umfangs 26 des Rotors in einem Luftspalt 46 ausgebildet sind. Eine Bauweise des Rotors kann hierbei derjenigen des Rotors 10 entsprechen.

In den Nuten N1 bis N18 sind elektrische Spulen L1 bis L18 des Stators 42 angeordnet. Im Folgenden ist der Übersichtlichkeit halber lediglich der Aufbau der Spule L1 beschrieben. Für die übrigen Spulen L2 bis L18 gelten die Beschreibungen entsprechend. Parallel zur Rotationsachse 18 verlaufen in den Nuten N1 bis N18 Wicklungshälften 48, 50 der Spule L1. An Stirnseiten des Stators 42 sind die beiden Wicklungshälften 48, 50 über Wicklungsköpfe 52 miteinander verbunden. In FIG 2 sind auch zu den übrigen Spulen L2 bis L18 die Verläufe der Wicklungsköpfe an den Stirnseiten des Stators 42 angedeutet. Die Spule L1 umgibt lediglich einen einzelnen Polzahn 54, d. h. die Wicklungshälften 48, 50 sind in benachbarten Nuten N1, N2 angeordnet. Jede der Wicklungshälfte 48, 50 der Spulen L1 bis L18 kann gleich viele Drähte umfassen.

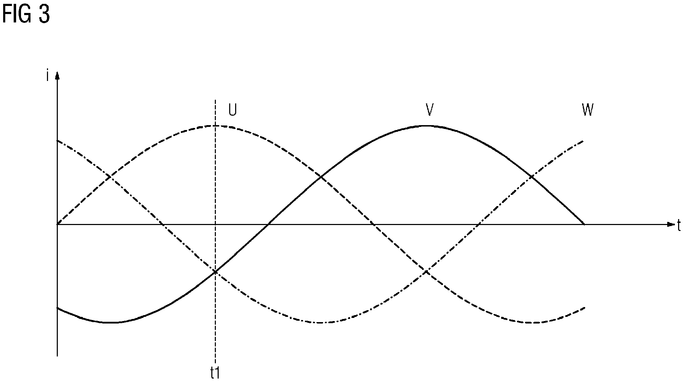

Im Folgenden ist anhand von FIG 2 bis FIG 4 erläutert, wie durch Einprägen eines dreiphasigen Drehstroms mit Phasen U, V, W mittels der Spulen L1 bis L18 in einem Luftspalt 46 zwischen dem Stator 42 und dem Rotor ein rotierendes magnetisches Drehfeld mit insgesamt 12 magnetischen Polen 56 (Nordpole und Südpole) erzeugt wird. In FIG 3 ist zu den drei Phasen U, V, W ein Verlauf einer Stromstärke i in jeder Phase über der Zeit t gezeigt.

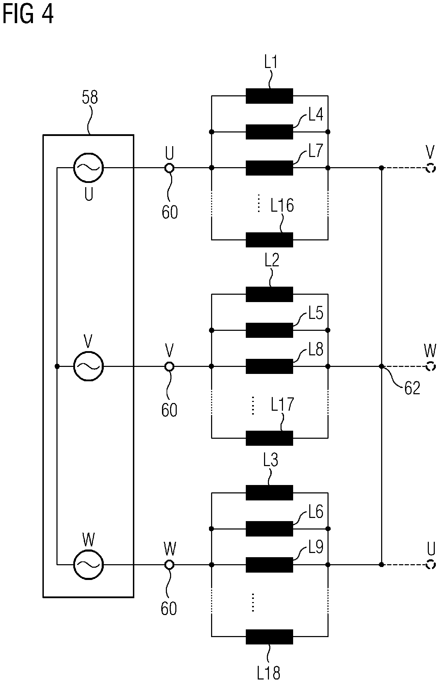

In FIG 2 ist die Orientierung des magnetischen Flusses der Spulen L1 bis L18 im Luftspalt 46 entlang des Umfangs 26 durch Pfeile angedeutet. Die elektrische Maschine mit dem Stator 42 ist an ein elektrisches Versorgungsnetz 58 angeschlossen (siehe FIG 4). Elektrische Kontakte 60 eines elektrischen Anschlusses der elektrischen Maschine sind mit jeweils einer der Phasen U, V, W elektrisch verbunden. Die Spulen L1, L4, L7, L10, L13 und L16 sind mit dem Kontakt 60 für die Phase U elektrisch verbunden. Diese Spulen können dabei parallel zueinander geschaltet sein. Die Spulen L2, L5, L8, L11, L14, L17 sind mit dem elektrischen Kontakt 60 für die Phase V elektrisch verbunden. Sie können dabei zueinander parallel geschaltet sein. Die Spulen L3, L6, L9, L12, L15, L18 sind elektrisch mit dem Kontakt 60 für die Phase W verbunden. Sie können dabei parallel zueinander geschaltet sein. Die freien Kontakte der Spulen L1 bis L18 können mit einem gemeinsamen Sternpunkt 62 (Sternschaltung) oder aber mit einer jeweils anderen Phase V, W, U verbunden sein (Dreieckschaltung). Die Dreieckschaltung ist nur bei dem Wicklungssystem des erfindungsgemäßen Antriebsmotors möglich.

In Abhängigkeit von einem betrachteten Zeitpunkt fließt durch jede der Spulen L1 bis L18 ein Strom mit einer bestimmten Richtung. Zur Veranschaulichung sei angenommen, dass die Stromflussrichtungen in den Spulen L1 bis L18 in dem in FIG 2 gezeigten Beispiel zu einem Zeitpunkt t1 betrachtet werden, wie er in FIG 3 kenntlich gemacht ist. Zu diesem Zeitpunkt weist die Stromstärke in der Phase U in einem Stromstärkemaximum auf, während die beiden Phasen V, W einen Strom mit dem halben Betrag und entgegengesetzter Flussrichtung führen. In FIG 2 ist für jede Wicklungshälfte 48, 50 eine sich ergebende Stromflussrichtung gezeigt. Ein Kreuz (X) in einer Wicklungshälfte 48 zeigt hierbei an, dass der Strom in der Zeichenebene von FIG 2 nach hinten vom Betrachter wegfließt. Ein Punkt (.) in einer Wicklungshälfte 50 zeigt an, dass der Strom senkrecht zur Zeichenebene der FIG 2 auf den Betrachter zufließt. Aus den sich zum Zeitpunkt t1 ergebenden Stromflussrichtungen in den Spulen L1 bis L18 kann für den Zeitpunkt t1 die Verteilung der magnetischen Pole 56 des magnetischen Drehfelds des Stators 42 konstruiert werden, wie sie in FIG 2 eingetragen ist.

Der Stator 42 kann auch mit 21 Nuten ausgebildet sein und dann einen Rotor mit 14 Polen aufweisen. Er kann auch 24 Nuten und einen Rotor mit 16 Polen aufweisen. Die Anordnung und Verschaltung der elektrischen Spulen des Stators kann dann den in FIG 2 und FIG 3 für die achtzehn Spulen L1 bis L18 gezeigten Ausführungsformen entsprechen.

Die Kombination der erfindungsgemäßen Merkmale ermöglicht den Aufbau einer elektrischen Maschine, die insbesondere für Elektrofahrzeuge sehr vorteilhaft ist. Durch die gewählten Polzahlen im Bereich von 2p = 12, 14, 16 (p ist hier die Polpaarzahl) sind einerseits die Ummagnetisierungsfrequenzen im weichmagnetischen Grundkörper 44 des Stators 42 für Elektrofahrzeuge im relevanten Drehzahlbereich D von 0 bis 10000 Umdrehungen pro Minute beherrschbar. Andererseits ist die Luftspaltinduktion I groß genug, um die gleiche Kompaktheit und den gleichen Wirkungsgrad wie mit einer mit Seltenerdmagneten (beispielsweise aus Neodym-Eisen-Bor, NdFeB) erregten Maschine zu erreichen.

Die ausgewählten Wicklungssysteme wiederum erzeugen die geringste Gegenfeldstärke im Rotor, wodurch die Permanentmagneten 14 besonders dünn sein können, selbst wenn sie aus Ferrit bestehen. Durch die Bandagen 40 werden die Flussleitelemente 16 und die Permanentmagneten 14 auch bei den genannten hohen Drehzahlen fest an die Welle 12 gedrückt.

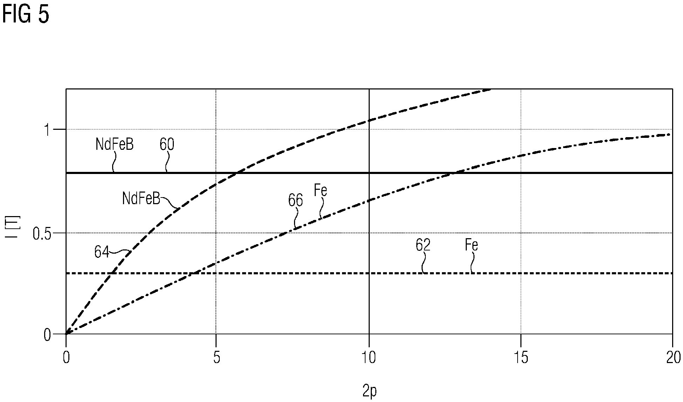

In FIG 5 ist zu diesen Erläuterungen in einem Diagramm gezeigt, welche magnetische Flussdichte oder Spaltinduktion I in Tesla (T) sich in Abhängigkeit von der Polzahl 2p im Durchschnitt im Luftspalt 46 ergibt, wenn einerseits ein Rotor aus dem Stand der Technik mit Permanentmagneten aus NdFeB (Induktionsverlauf 60) und mit Ferrit (hier mit Fe abgekürzt, Induktionsverlauf 62) verwendet wird. Diese Magneten sind dabei auf dem Rotor in Umfangsrichtung an dessen Außenseite in der Weise befestigt, dass die Magnetisierungen der Permanentmagneten in radialer Richtung zum Luftspalt 46 hin bzw. entgegen der radialen Richtung von diesem wegweisen.

Wird stattdessen eine elektrische Maschine mit einem Rotor gemäß dem Aufbau des Rotors 10 verwendet, so ergibt sich bei Verwendung von Seltenerdmagneten aus NdFeB für die Permanentmagneten 14 ein Induktionsverlauf 64. Bei Verwendung von Ferritmagneten ergibt sich ein Induktionsverlauf 66. Für eine Synchronmaschine zum Antreiben eines Elektrofahrzeugs ist eine Induktion I im Bereich von 0,6 bis 0,8 Tesla erwünscht, wie es sich bei der auf Seltenerdmagneten beruhenden Bauweise aus dem Stand der Technik ergibt (Induktionsverlauf 60). Wie FIG 5 zeigt, erhält man mit einer Flusskonzentration, wie sie der Aufbau gemäß FIG 1 ermöglicht, mit einer Polzahl von 2p = 12 bis 2p = 16 ebenfalls genau diesen Bereich. Damit können auch die kostengünstigeren Ferritmagneten in elektrischen Maschinen mit gleicher Kompaktheit verwendet werden.

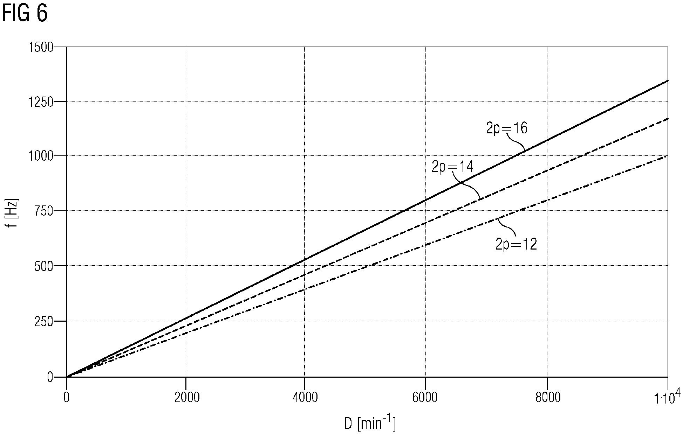

In FIG 6 ist gezeigt, welche Frequenzen Wirbelströme im weichmagnetischen Grundkörper 44 eines Stators 42 aufweisen, wenn eine Drehzahl D des Rotors Werte im Bereich von 0 bis 10000 Umdrehungen pro Minute aufweist. Die sich ergebende Ummagnetisierungsfrequenz f in Hz ist bei den betrachteten Polzahlen 2p = 12, 2p = 14, 2p = 16 immer kleiner als 1500 Hz. Damit ist die Wärme, die in den Blechen des Stators 42 entsteht, mit einfachen Mitteln abführbar.

Durch die Beispiele ist also insgesamt gezeigt, wie eine kostengünstige elektrische Maschine für einen elektrischen Antrieb eines Elektrofahrzeugs bereitgestellt werden kann.

## Patentansprüche

1. Elektrischer Antriebsmotor eines Kraftwagens, wobei der Antriebsmotor einen Stator (42) und einen Rotor (10) aufweist, zwischen denen ein Luftspalt (46) ausgebildet ist, wobei
- der Stator (42) Nuten (N1 bis N18) aufweist, in denen elektrische Spulen (L1 bis L18) angeordnet sind, welche dazu ausgelegt sind, bei Einprägen eines dreiphasigen Drehstroms in die Spulen (L1 bis L18) ein magnetisches Drehfeld in dem Luftspalt (46) zu erzeugen, und wobei
- der Rotor (10) entlang eines Rotorumfangs (26) angeordnete Permanentmagneten (14) sowie zwischen diesen angeordnete weichmagnetische Flussleitelemente (16) aufweist,
**dadurch gekennzeichn et,** dass Magnetisierungen (24) der Permanentmagneten (14) tangential zum Rotorumfang (26) ausgerichtet sind und ein magnetischer Fluss der Permanentmagneten (14) durch die Flussleitelemente (16) in radialer Richtung (28) umgelenkt ist und hierdurch im Luftspalt (46) entlang des Rotorumfangs (26) magnetische Pole (34) des Rotors (10) ausgebildet sind, wobei die Anzahl der Nuten (N1 bis N18) des Stators (42) anderthalb mal so groß wie die Anzahl der Pole (34) des Rotors (10) ist.

2. Elektrischer Antriebsmotor nach Anspruch 1, wobei jede der Spulen (L1 bis L18) des Stators (42) aus einer Wicklung gebildet ist, die zwei sich entlang einer Rotationsachse (18) des Rotors (10) erstreckende Wicklungshälften (48, 50) aufweist, und bei jeder Spule (L1 bis L18) deren Wicklungshälften (48, 50) in benachbarten Nuten (N1 bis N18) angeordnet sind.

3. Elektrischer Antriebsmotor nach Anspruch 1 oder 2, wobei in jeder der Nuten (N1 bis N18) jeweils Wicklungshälften (48, 50) zweier unterschiedlicher Spulen (L1 bis L18) angeordnet sind.

4. Elektrischer Antriebsmotor nach Anspruch 3, wobei in zumindest einer Nut (N1 bis N18) die Wicklungshälften (48, 50) in radialer Richtung (28) zu einer Zweischichtwicklung angeordnet sind.

5. Elektrischer Antriebsmotor nach Anspruch 3 oder 4, wobei in zumindest einer Nut (N1 bis N18) die Wicklungshälften (48, 50) entlang des Umfangs (26) zu einer Zahnspulenwicklung angeordnet sind.

6. Elektrischer Antriebsmotor nach einem der vorhergehenden Ansprüche, wobei die Anzahl der Pole (34) gleich oder größer als 12 ist, bevorzugt 12 oder 14 oder 16.

7. Elektrischer Antriebsmotor nach einem der vorhergehenden Ansprüche, wobei der elektrische Antriebsmotor drei elektrische Kontakte (60) aufweist, die dazu ausgelegt sind, einer vorbestimmten Anzahl der Spulen (L1 bis L18) einen elektrischen Strom mit einer unterschiedlichen Phase (U,V,W) eines dreiphasigen Drehstromnetzes (58) zuzuführen, wobei mit jedem der Kontakte (60) gleich viele Spulen (L1 bis L18) verbunden ist und alle mit einem Kontakt (60) verbundenen Spulen (L1 bis L18) zueinander parallel geschaltet sind.

8. Elektrischer Antriebsmotor nach einem der vorhergehenden Ansprüche, wobei die Permanentmagneten (14) Ferritmagneten sind.

9. Elektrischer Antriebsmotor nach einem der vorhergehenden Ansprüche, wobei bei zumindest einem Flussleitelement (16) ein Verhältnis derjenigen Oberfläche (30,32) des Flussleitelements (16), durch welche der magnetische Fluss eines der Permanentmagneten (14) zum Luftspalt (46) hin austritt oder aus diesem in das Flussleitelement (16) hineintritt, zu einer Polfläche (36,38) des Permanentmagneten (14) größer als Eins, bevorzugt größer als 1,5, ist.

10. Elektrischer Antriebsmotor nach einem der vorhergehenden Ansprüche, wobei in dem Luftspalt (46) ein magnetisches Feld der Permanentmagneten (14) eine durchschnittliche Feldstärke (I) in einem Bereich von 0,6 Tesla und 1,0 Tesla, bevorzugt von 0,6 Tesla bis 0,8 Tesla, aufweist.

11. Elektrischer Antriebsmotor nach einem der vorhergehenden Ansprüche, wobei der elektrische Antriebsmotor für einen dauerhaften Betrieb bei einer Drehzahl (D) von 10000 Umdrehungen pro Minute ausgelegt ist.

12. Elektrischer Antriebsmotor nach einem der vorhergehenden Ansprüche, wobei der Rotor (10) Anpressmittel (40) aufweist, welche dazu ausgelegt sind, die Permanentmagneten (14) und die Flussleitelemente (16) mit einer Kraft zur Welle (12) des Rotors (10) hin zu beaufschlagen, wobei die Anpressmittel vorzugsweise Bandagen (40) umfassen.

13. Elektrischer Antriebsmotor nach einem der vorhergehenden Ansprüche, wobei die Stränge, in welchen der dreiphasige Drehstrom fließt, im Stern geschaltet sind.

14. Elektrischer Antriebsmotor nach einem der Ansprüche 1 bis 12, wobei die Stränge, in welchen der dreiphasige Drehstrom fließt, im Dreieck geschaltet sind.

15. Kraftwagen mit einer elektrischen Fahrantriebseinrichtung, welche einen elektrischen Antriebsmotor nach einem der vorhergehenden Ansprüche aufweist.

## Geänderte Patentansprüche

### Geänderte Patentansprüche gemäss Regel 137(2) EPÜ.

**1.** Elektrischer Antriebsmotor eines Kraftwagens, wobei der Antriebsmotor einen Stator (42) und einen Rotor (10) aufweist, zwischen denen ein Luftspalt (46) ausgebildet ist, wobei
- der Stator (42) Nuten (N1 bis N18) aufweist, in denen elektrische Spulen (L1 bis L18) angeordnet sind, welche dazu ausgelegt sind, bei Einprägen eines dreiphasigen Drehstroms in die Spulen (L1 bis L18) ein magnetisches Drehfeld in dem Luftspalt (46) zu erzeugen, und wobei
- der Rotor (10) entlang eines Rotorumfangs (26) angeordnete Permanentmagneten (14) sowie zwischen diesen angeordnete weichmagnetische Flussleitelemente (16) aufweist,
wobei Magnetisierungen (24) der Permanentmagneten (14) tangential zum Rotorumfang (26) ausgerichtet sind und ein magnetischer Fluss der Permanentmagneten (14) durch die Flussleitelemente (16) in radialer Richtung (28) umgelenkt ist und hierdurch im Luftspalt (46) entlang des Rotorumfangs (26) magnetische Pole (34) des Rotors (10) ausgebildet sind, wobei die Anzahl der Nuten (N1 bis N18) des Stators (42) anderthalb mal so groß wie die Anzahl der Pole (34) des Rotors (10) ist,
**dadurch gekennzeichnet, dass** der elektrische Antriebsmotor drei elektrische Kontakte (60) aufweist, die dazu ausgelegt sind, einer vorbestimmten Anzahl der Spulen (L1 bis L18) einen elektrischen Strom mit einer unterschiedlichen Phase (U,V,W) eines dreiphasigen Drehstromnetzes (58) zuzuführen, wobei mit jedem der Kontakte (60) gleich viele Spulen (L1 bis L18) verbunden sind und alle mit einem Kontakt (60) verbundenen Spulen (L1 bis L18) zueinander parallel geschaltet sind.

**2.** Elektrischer Antriebsmotor nach Anspruch 1, wobei jede der Spulen (L1 bis L18) des Stators (42) aus einer Wicklung gebildet ist, die zwei sich entlang einer Rotationsachse (18) des Rotors (10) erstreckende Wicklungshälften (48, 50) aufweist, und bei jeder Spule (L1 bis L18) deren Wicklungshälften (48, 50) in benachbarten Nuten (N1 bis N18) angeordnet sind.

**3.** Elektrischer Antriebsmotor nach Anspruch 1 oder 2, wobei in jeder der Nuten (N1 bis N18) jeweils Wicklungshälften (48, 50) zweier unterschiedlicher Spulen (L1 bis L18) angeordnet sind.

**4.** Elektrischer Antriebsmotor nach Anspruch 3, wobei in zumindest einer Nut (N1 bis N18) die Wicklungshälften (48, 50) in radialer Richtung (28) zu einer Zweischichtwicklung angeordnet sind.

**5.** Elektrischer Antriebsmotor nach Anspruch 3 oder 4, wobei in zumindest einer Nut (N1 bis N18) die Wicklungshälften (48, 50) entlang des Umfangs (26) zu einer Zahnspulenwicklung angeordnet sind.

**6.** Elektrischer Antriebsmotor nach einem der vorhergehenden Ansprüche, wobei die Anzahl der Pole (34) gleich oder größer als 12 ist, bevorzugt 12 oder 14 oder 16.

**7.** Elektrischer Antriebsmotor nach einem der vorhergehenden Ansprüche, wobei die Permanentmagneten (14) Ferritmagneten sind.

**8.** Elektrischer Antriebsmotor nach einem der vorhergehenden Ansprüche, wobei bei zumindest einem Flussleitelement (16) ein Verhältnis derjenigen Oberfläche (30,32) des Flussleitelements (16), durch welche der magnetische Fluss eines der Permanentmagneten (14) zum Luftspalt (46) hin austritt oder aus diesem in das Flussleitelement (16) hineintritt, zu einer Polfläche (36,38) des Permanentmagneten (14) größer als Eins, bevorzugt größer als 1,5, ist.

**9.** Elektrischer Antriebsmotor nach einem der vorhergehenden Ansprüche, wobei in dem Luftspalt (46) ein magnetisches Feld der Permanentmagneten (14) eine durchschnittliche Feldstärke (I) in einem Bereich von 0,6 Tesla und 1,0 Tesla, bevorzugt von 0,6 Tesla bis 0,8 Tesla, aufweist.

**10.** Elektrischer Antriebsmotor nach einem der vorhergehenden Ansprüche, wobei der elektrische Antriebsmotor für einen dauerhaften Betrieb bei einer Drehzahl (D) von 10000 Umdrehungen pro Minute ausgelegt ist.

**11.** Elektrischer Antriebsmotor nach einem der vorhergehenden Ansprüche, wobei der Rotor (10) Anpressmittel (40) aufweist, welche dazu ausgelegt sind, die Permanentmagneten (14) und die Flussleitelemente (16) mit einer Kraft zur Welle (12) des Rotors (10) hin zu beaufschlagen, wobei die Anpressmittel vorzugsweise Bandagen (40) umfassen.

**12.** Elektrischer Antriebsmotor nach einem der vorhergehenden Ansprüche, wobei die Stränge, in welchen der dreiphasige Drehstrom fließt, im Stern geschaltet sind.

**13.** Elektrischer Antriebsmotor nach einem der Ansprüche 1 bis 11, wobei die Stränge, in welchen der dreiphasige Drehstrom fließt, im Dreieck geschaltet sind.

**14.** Kraftwagen mit einer elektrischen Fahrantriebseinrichtung, welche einen elektrischen Antriebsmotor nach einem der vorhergehenden Ansprüche aufweist.
